# EUROPÄISCHE PATENTSCHRIFT

(11) **EP 2 445 136 B1**
(45) Veröffentlichungstag und Bekanntmachung des Hinweises auf die Patenterteilung: **03.09.2014**
(21) Anmeldenummer: 11009646.8
(22) Anmeldetag: 16.09.2002
(51) Int. Cl.: H04L 5/02, H04L 27/26

(54) **Verfahren zum Erzeugen von Sendesignalen bzw. OFDM-Symbolen in einem Komminikationssystem und Kommunikationssystemvorrichtung**
Method for generating transmission signals or OFDM symbols in a communication system and communication system device
Procédé de production de signaux d'émission ou de symboles OFDM dans un système de communication et dispositif de système de communication

(30) Priorität: 18.09.2001 DE 10146002; 18.09.2001 EP 01122310
(43) Veröffentlichungstag der Anmeldung: 25.04.2012
(62) Teilanmeldung aus: 02777120.3
(73) Patentinhaber: Siemens Aktiengesellschaft, 80333 München (DE)
(72) Erfinder: Costa, Elena, Dr., 81739 München (DE); Galda, Dirk, 85540 Haar-Gronsdorf (DE); Haas, Harald, Prof., Edinburgh EH10 5RE (GB); Rohling, Hermann, Prof., 38304 Wolfenbüttel (DE); Schulz, Egon, Dr., SW4 8JR London (GB)

(56) Entgegenhaltungen:
- EP-A- 0 966 133
- US-B1- 6 188 717
- SAULNIER G J ET AL: "OFDM spread spectrum communications using lapped transforms and interference excision", COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, 8. Juni 1997 (1997-06-08), Seiten 944-948, XP010227242, ISBN: 0-7803-3925-8
- HO T F ET AL: "Synthesis of low-crest waveforms for multicarrier CDMA system", GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 131-135, XP010159486, ISBN: 0-7803-2509-5

## Beschreibung

Die Erfindung bezieht sich auf ein Verfahren zum Erzeugen von Sendesignalen, insbesondere OFDM-Symbolen dafür, in einem Kommunikationssystem gemäß dem Oberbegriff des Patentanspruches 1 sowie eine Kommunikationssystemvorrichtung gemäß dem Oberbegriff des Patentanspruches 9.

Bei modernen Kommunikationssystemen, insbesondere gemäß dem Standard GSM (Global System for Mobile Communications) oder UMTS (Universal Mobile Telecommunications System) werden Teilnehmerdaten vor dem Erzeugen eines Sendesignals codiert und auf einen Träger aufgeteilt.

Bei Kommunikationssystemen der vierten Generation sind Vielfachzugriffsverfahren mit OFDM-Übertragungssystemen (OFDM: Orthogonal Frequency Division Multiplex) geplant. Diese ordnen die Teilnehmerdaten bzw. Daten von jeweils bestimmten Datenquellen einer Anzahl von Subträgern in OFDM-Symbolen (OFDM-TDMA) oder einer Zahl unterschiedlicher Subträger (OFDM-FDMA) zu. Bei beispielsweise OFDM-FDMA (FDMA: Frequency Division Multiple Access) stellen die Subträger einzelne jeweils zueinander benachbarte Frequenzbänder eines größeren Frequenzbereiches dar. Bekannt ist z.B. auch, die Teilnehmerdaten bzw. Userdaten jeweils einer Anzahl kompletter OFDM-Symbole exklusiv zuzuordnen, wie bei OFDM-TDMA (TDMA: Time Division Multiple Access), wobei die Teilnehmerdaten in dem OFDM-Symbol für die Übertragung über die Schnittstelle zwischen verschiedenen Kommunikationsstationen zeitlich aufeinander folgend angeordnet werden, insbesondere Teilnehmerdaten einer Station jeweils einem oder mehreren der OFDM-Symbole direkt aufeinander folgend zugeordnet werden. Durch solche OFDM-Übertragungsverfahren werden Zwischensymbol-Interferenzen (ISI: Inter-Symbol-Interferences) vermieden. Ferner werden bei beiden Vielfachzugriffsverfahren zusätzlich Mehrfachzugriff-Interferenzen (MAI: Multiple Access Interferences) vermieden.

Gemäß einer alternativen Verfahrensweise können die Teilnehmerdaten durch die Verwendung orthogonaler Codes mit Hilfe einer orthogonalen Matrix über eine vorgegebene Anzahl von Subträgern und/oder OFDM-Symbole gespreizt werden, wie bei dem unter OFDM-CDMA bzw. MC-CDMA (CDMA: Code Division Multiple Access; MC: Multiple Carrier) bekannten Verfahren. Bei dem OFDM-CDMA-Verfahren werden die Daten aller Teilnehmer allen verfügbaren Frequenzen zugeordnet, wobei Codes zur Trennung verwendet werden. Ohne weitere Maßnahmen entstehen in diesem Fall und insbesondere bei Betrachtung mehrerer Teilnehmer- bzw. Datenquellen, deren Daten parallel zueinander eingehen, unerwünschte Mehrfachzugriffs-Interferenzen.

Zur Vermeidung dieses Problems erfolgt eine Spreizung der Teilnehmerdaten über mehrere Subträger daher nur bei gleichzeitiger Zuordnung von Subträgern zu mehreren Teilnehmern, was als OFDM-FDMA mit Teilnehmer/User-spezifischer Spreizung der Nutzdaten bezeichnet wird. Spreizung und Zuordnung von Subträgern erfolgen dabei in einem gemeinsamen und umfassenden Verfahrensschritt. Zur Spreizung werden vorwiegend sogenannte Walsh-Hadamard-Matrizen unterschiedlicher Größe eingesetzt, wie dies beispielsweise aus M. Yee, J.-P. Linnartz: Controlled Equalization of Multi-Carrier CDMA in an Indoor Rician Fading Channel, Proc. IEEE VTC'94, Stockholm, Schweden, 1994, oder T. Müller, K. Brüninghaus, H. Rohling: Performance of Coherent OFDM-CDMA for Broadband Mobile Communications, Wireless Personal Communications, Kluwer Academic Publisher, 1996, bekannt ist. Verschiedenen Teilnehmern werden dabei je nach benötigter Datenrate zur Übertragung eine Anzahl zwischen 1 und N der orthogonalen Codes zugeordnet, wobei N die Anzahl der verfügbaren Subträger ist.

Ferner ist aus K. Brüninghaus, H. Rohling: Multi Carrier Spread Spectrum and its Relationship to Single-Carrier Transmission, Proc. IEEE VTC'98, Ottawa, Kanada, 1998, eine Spreizung mittels einer FFT-Matrix (FFT: Fast Fourier Transformation) zur Reduzierung des Verhältnisses der Spitzenwerte zu den Durchschnittswerten (PAR: Peak-to-Average-Ratios) allgemein diskutiert, wobei jedoch Vielfachzugriffe nicht berücksichtigt werden.

Aus der EP 0966133 A2 ist ein OFDM-Übertragungs-Verfahren zum drahtlosen Übertragen von Informationsdaten bekannt, bei dem die Daten, z.B. Sprach- oder Videodaten, mittel- oder unmittelbar einem Kanalkodierer zugeführt werden, der diese Daten kanalkodiert. Danach werden die kanalkodierten Daten über eine Verschachtelungseinrichtung an einen Modulator weitergeleitet, der eine Zeichenzuordnung bewirkt. Die modulierten Daten werden dann einer speziell für das angegebene OFDM-Übertragungs-Verfahren aufgebaute ROT-(Random Orthogonal Transform-)Schaltung zugeführt, die transformierte Daten an eine inverse schnelle Fourier-Transformations(IFFT)-Schaltung zur Erzeugung von Ausgangssignaldaten ausgibt. Die in der IFFT-Schaltung erzeugten Ausgangssignaldaten werden nach einer D/A- und Aufwärtswandlung mittels einer Empfangs/Sendeeinrichtung drahtlos übertragen. Bei der Operation in der ROT-Schaltung wird gemäß EP 98 104 287.2 ein Eingangs-Zeichenvektor mit n Daten-Abtastproben des Modulators mit einer ROT-Matrix mit n orthogonalen Spalten-Vektoren und n orthogonalen Zeilen-Vektoren multipliziert. Infolge dieser ROT-Operation entsteht ein transformierter Ausgangs-Zeichenvektor mit wiederum n Daten-Abtastproben. Die ROT-Technik ist eine Technik, welche die willkürlich verteilten Informationsdaten-Zeichenvektoren vor der IFFT-Verarbeitung und der OFDM-Modulation durch eine orthogonale Matrix zufallsmäßig anordnet. Diese willkürliche Verteilung wird nach der FFT-Verarbeitung und der OFDM-Demodulation auf der Empfangsseite aufgelöst.

Um gemäß der US-Druckschrift 6,188,717 B1 ein digitales, sowohl für die Aufwärtsstrecke als auch für die Abwärtsstrecke einsetzbares Funkübertragungsverfahren bereitzustellen, das eine hohe spektrale Effizienz aufweist, so dass eine sehr große Anzahl von aktiven Teilnehmerstationen über den zur Verfügung stehenden Funkkanal übertragen kann, dessen Modulationsverfahren eine kohärente Detektion mit geringem Aufwand und hoher Zuverlässigkeit ermöglicht, das Interferenzen zwischen den Teilnehmerstationen einer Basisstation verhindert und das eine annähernd fehlerfreie Übertragung unterschiedlicher Datenmengen (Audio, Video, Text, Daten usw.) über den zur Verfügung stehenden Funkkanal sicherstellt, wird das Mehrträgermodulationsverfahren mit der Spread-Spectrum-Technik in optimaler Weise kombiniert. Diese Kombination erlaubt eine Maximum-Likelihood-Sequenzschätzung mit geringer Komplexität zur kohärenten Detektion der Daten im Empfänger und kann sowohl für die Aufwärtsstrecke als auch für die Abwärtsstrecke verwendet werden. Die notwendige Kanalschätzung lässt sich in zweckmäßiger Weise durch eine einfache Wiener-Filterung realisieren.

Der Aufsatz von SAULNIER G. J. et al. mit dem Titel "OFDM Spread Spectrum Communications using Lappewd Transforms and Interference Excision" auf den Seiten 944 bis 948 erschienen in Communications, 1997, ICC 1997 Montreal, Towards the Knowledge Millennium, 1997, IEEE International Conference on Montreal, Que., Canada 8-12 June 1997, New York, NY, USA am 8. Juni 1997 beschreibt und untersucht die Performance von "Spread Spectrum"-basierten OFDM-Kommunikationssystemen bei der Existenz von klangbehafteten und gepulsten Gaußverteilten Interferenzen für ein ersten Systems mit Frequenzvielfalt (frequency diversity), bei dem gleiche Datenbits gleichzeitig auf allen Trägern/Kanälen gesendet werden und für ein zweites System mit Zeit- und Frequenzvielfalt, bei dem ein gegebenes Datenbit zunächst auf verschieden Kanälen/Trägern gesendet wird bis es auf allen möglichen Kanälen/Trägern übertragen wird. Dabei wird gezeigt, dass Interferenz-Auslöschung vorteilhaft in Empfänger eingesetzt werden können. Außerdem konnte anhand von "Bit Error Rate"-Simulationen bei auftretenden "Additive White Gaussian Noise (AWGN)" und Interferenzen in Systemen mit verschiedene Blocktransformationen und einer "Modulated Lapped Transform (MLT)" gezeigt werden, dass MLT eine bessere Performance bezüglich der Fähigkeit, die Interferenzenergie zu begrenzen, besitzt.

Die Aufgabe der Erfindung besteht darin, ein alternatives Verfahren zum Erzeugen von Sendesignalen, insbesondere OFDM-Symbolen dafür, in einem Kommunikationssystem sowie eine alternative Kommunikationssystemvorrichtung zum Erzeugen von Sendesignalen, insbesondere OFDM-Symbolen dafür, anzugeben.

Diese Aufgabe wird sowohl ausgehend von dem im Oberbegriff des Patentanspruchs 1 definierten Verfahren zum Erzeugen von Erzeugen von Sendesignalen, insbesondere OFDM-Symbolen dafür, in einem Kommunikationssystem durch die im Kennzeichen des Patentanspruchs 1 angegebenen Merkmale als auch ausgehend von der im Oberbegriff des Patentanspruchs 9 definierten Kommunikationssystemvorrichtung durch die im Kennzeichen des Patentanspruchs 9 angegebenen Merkmale gelöst.

Dabei werden insbesondere die Daten der Datenquelle zur Bildung eines zeitlich, insbesondere durch eine Inverse Fast Fourier-Transformation (IFFT), abfolgenden OFDM-Symbols datenquellenspezifisch transformiert und den Subträgern zugeordnet, wobei (i) die Zuordnung unabhängig von der Transformation datenquellenspezifisch erfolgt, (ii) die Transformation als Spreizung mittels einer orthogonalen Matrix durchgeführt wird und (iii) das Transformationsergebnis derart auf die Subträger übertragen wird, dass die Daten der Datenquelle exklusiv mehreren Subträgern zugeordnet werden.

In vorteilhafter Weise können durch das datenquellenspezifische, d.h. exklusive Zuordnen von Subträgern zu den jeweiligen Teilnehmern bzw. Teilnehmerdaten, auf die das Transformationsergebnis einer orthogonalen Transformationsmatrize bzw. Spreizung übertragen wird, trotz Anwendung der Transformation die unerwünschten Mehrfachzugriffs-Interferenzen vermieden werden, dies im Idealfall vollständig.

In vorteilhafter Weise ist dabei die Wahl der orthogonalen Matrix zunächst beliebig. Weiterhin kann auch die Zuordnung des Transformationsergebnisses zu den exklusiven Subträgern eines Teilnehmers bzw. einer Datenquelle auf zunächst beliebige Art und Weise erfolgen.

Die Trennung von Spreizung der teilnehmerspezifischen Daten bzw. datenquellenspezifischen Daten und der Zuordnung der transformierten bzw. gespreizten Daten zu den Subträgern eines oder mehrerer OFDM-Symbole ist besonders vorteilhaft, wenn für die Spreizung anstelle z.B. der Walsh-Hadamard-Transformation eine diskrete Fourier-Transformation (DFT) oder schnelle Fourier-Transformation (FFT) verwendet wird.

Gemäß einer Weiterbildung der Erfindung nach Anspruch 8 oder 16 kann eine besonders vereinfachte Erzeugung der OFDM-Symbole vorgenommen werden, da die Kombination der Verfahrensschritte "Fast Fourier-Transformation (FFT) bzw. diskrete Fourier Transformation (DFT) und inverse Fast Fourier-Transformation (IFFT)" entfallen kann, weil die beiden aufeinanderfolgenden Fourier-Transformationen sich in der Wirkung bis auf insbesondere die Frequenzverschiebung aufheben.

Durch die zeitlich wiederholte Abfolge der Daten in dem OFDM-Symbol entsteht auf den ersten Blick eine große Redundanz. Da sich jedoch beim Senden auf der Funk-Schnittstelle die entsprechend erzeugten Signale einer Vielzahl von Stationen überlagern, ist diese Redundanz im Gesamtsystem unter Volllast jedoch nicht datenquellenspezifisch vorhanden. Bei z.B. dreifacher Redundanz für eine Datenquelle, dies entspricht vier Perioden bzw. einer Belegung jedes vierten Subträgers, können vier Datenquellen gleichzeitig ohne Interferenz auf die Luft-Schnittstelle zugreifen.

Entsprechend ist es gemäß dieser Weiterbildung nach dem Anspruch 8 oder 16 bei der Kommunikation zwischen z.B. einer mobilen Teilnehmerstation und einer Basisstation in Aufwärtsrichtung (Uplink) auch möglich, die eintreffenden Daten der einzelnen Datenquellen gegebenenfalls nach üblicher Codierung, Verwürfelung und Modulation direkt auf die entsprechenden OFDM-Symbolpositionen zu verteilen bzw. zu kombinieren. Dadurch wird der Aufbau der sendenden Kommunikationsstation vorteilhaft vereinfacht. Zweckmäßigerweise kann die Basisstation unverändert bleiben und weiterhin die Struktur eines OFDM-Empfängers besitzen, um die OFDM-spezifischen Vorteile wie einfache Entzerrung des Empfangssignals und Trennung der Teilnehmerstationsdaten bzw. Teilnehmer ausnutzen zu können.

Zusätzliche vorteilhafte Ausgestaltungen sind Gegenstand weiterer abhängiger Patentansprüche.

Insbesondere in Kombination mit einer äquidistanten Anordnung der Subträger auf dem Träger, insbesondere auf der Frequenzachse, für die verschiedenen Teilnehmerdaten bzw. Datenquellen ergibt sich dann ein OFDM-FDMA-System, bei dem das Zeitsignal bzw. die OFDM-Symbole hinter der üblichen inversen Fourier-Transformation (IFFT) eine konstante Einhüllende aufweisen. Dies ist ein ganz wesentlicher Vorteil, da die diversen Verfahren zur Glättung, die derzeit anzuwenden wären, entbehrlich werden.

Ausführungsbeispiele der Erfindung werden nachfolgend anhand der Zeichnungen näher erläutert. Es zeigen:
- FIG 1: ein Schema für einen allgemeinen Mehrfachzugriff, wobei die Struktur eines OFDM-FDMA-Systems mit teilneh- merspezifischer Spreizung der Datensymbole dargestellt ist;
- FIG 2: schematisch eine mögliche Realisierung eines OFDM-FDMA-Systems mit besonders bevorzugter FFT-Spreizmatrix und Zuordnung der Teilnehmerdaten zu äquidistanten Subträgern;
- FIG 3: schematisch eine Zuordnung von gespreizten Teilnehmerdaten zu äquidistanten Subträgern und
- FIG 4: eine besonders bevorzugte Realisierungsform für die Durchführung des Verfahrens.

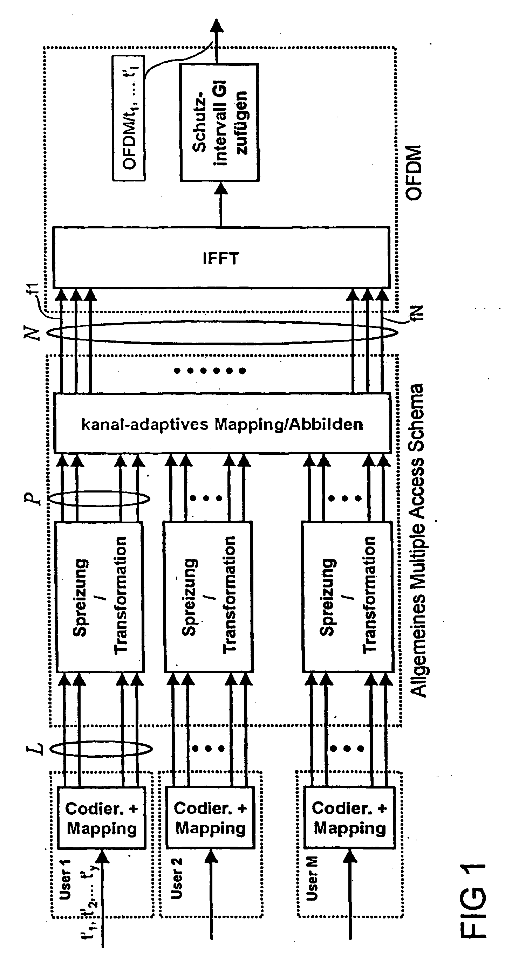

Wie aus FIG 1 ersichtlich, besteht ein Verfahren zum Erzeugen von OFDM-Symbolen aus verschiedenen einzelnen Schritten. Hereinkommende Teilnehmerdaten von einzelnen Teilnehmern bzw. Teilnehmerstationen oder Datenquellen sind einzelne Daten t'1, t'2, ... t'y, die in zeitlicher Abfolge eintreffen. Beispielhaft ist das Eintreffen von Daten von M verschiedenen Teilnehmern bzw. Teilnehmerstationen oder Datenquellen dargestellt (User 1 - User M). Es folgt eine individuelle Vorverarbeitung für die Daten dieser Teilnehmer bzw. User in einzelnen Blöcken, wobei die Vorverarbeitung beispielsweise in üblicher Weise aus einer Codierung, einer Verwürfelung (Interleaving) und einer Modulation besteht. Bei dieser ersten Codierung handelt es sich um eine Kanalcodierung, die teilnehmerspezifisch vorgenommen wird. Ferner erfolgt eine Umsetzung von einem seriellen Signal auf ein paralleles Signal, wobei die hintereinander eintreffenden Daten auf L verschiedene Datenpfade bzw. Leitungen verteilt bzw. abgebildet (Mapping) werden. Die y Zeitwerte werden somit pro Dateneingang codiert abgebildet, wodurch je Teilnehmer Datensymbole aus L komplexen Einzelwerten entstehen. Diese können Elemente irgendeines beliebigen Symbolsatzes sein, beispielsweise PSK-oder QAM-modulierte Daten (PSK: Phase Shift Keying; QAM: Quadratur Amplitude Modulation).

In dem nachfolgenden Block ist die eigentliche Transformation bzw. Spreizung und die Codierung der Daten verschiedener Teilnehmer auf die einzelnen Frequenz-Subträger dargestellt.

Die auf den jeweils für einen Teilnehmer auf L Datenpfaden eintreffenden Daten werden in einem ersten Schritt gespreizt, d.h. von insgesamt L Datenwerten auf P Datenwerte verteilt. Dies dient vorzugsweise der Ausnutzung der statistisch unabhängigen Ausbreitung der Signale auf unterschiedlichen Subträgern (Frequenz-Diversität). Bei den bevorzugten Ausführungsbeispielen wird die Anzahl der einzelnen Datenwerte bzw. Leitungen nicht verändert, obwohl dies auch möglich ist, so dass vor und nach der Spreizung jeweils L komplexe Datenwerte pro Teilnehmer vorliegen. In Analogie zur Spreizung der Daten mit Walsh-Hadamard-Matrizen bei OFDM-CDMA entspricht L der Anzahl der der Teilnehmerstation zugeordneten Codes und P der Anzahl der verfügbaren, orthogonalen Codesymbole. Die Spreizung entspricht in diesem Fall einem Volllast-System.

In dem nachfolgenden Schritt erfolgt die Abbildung auf die einzelnen Subträger, wobei vorzugsweise ein Kanal-adaptives Abbilden (Channel Adaptive Mapping) vorgenommen wird. Während in das dargestellte Symbol pro Teilnehmer P bzw. L Datenleitungen hineinführen, führen aus dem Symbol stellvertretend für die einzelnen Subträger Nc Leitungen bzw. Datenpfade heraus. Dabei steht die oberste Leitung stellvertretend für den Subträger f1...fN mit der niedrigsten Frequenz f1 und die unterste dargestellte Leitung bzw. der unterste Datenpfad steht für den Subträger mit der höchsten im Frequenzband verfügbaren Frequenz fN.

Nach der Verteilung der Daten auf die verschiedenen Frequenz-Subträger wird in dem dritten dargestellten Block zuerst eine inverse Fourier-Transformation durchgeführt, beispielsweise eine inverse schnelle Fourier-Transformation IFFT. Es folgt eine Umwandlung der parallelen Daten in serielle Daten. Gemäß den derzeit üblichen Konventionen wird dabei eine zeitliche Abfolge von Datenwerten t1...ti, ti+1...t2i,... erzeugt, denen zur Bildung eines OFDM-Symbols ein Schutzintervall GI (Guard Interval) als zyklische Fortsetzung des Zeitsignals vorweg gesetzt wird.

Bei der Beschreibung der Struktur des OFDM-FDMA-Systems mit der teilnehmerspezifischen Spreizung der Datensymbole wird vorstehend bewusst zwischen einerseits der Spreizung bzw. Transformation und andererseits dem Abbilden auf die Subträger unterschieden.

Diese Trennung wird vorgenommen, um in einem ersten Schritt die Daten der einzelnen Teilnehmer bzw. User zunächst mit Hilfe einer orthogonalen Matrix transformieren bzw. spreizen zu können. In dem nachfolgenden Schritt wird dann das Transformationsergebnis auf Subträger übertragen, wobei jedem der einzelnen Teilnehmer bzw. User exklusiv Subträger zugeordnet werden. Dabei kann die Zuordnung der Subträger prinzipiell beliebig erfolgen, wobei Systeme bevorzugt werden, bei denen die ersten Subträger dem ersten Teilnehmer und die letzten Subträger dem letzten Teilnehmer zugeordnet werden. Dies ist jedoch nicht zwingend erforderlich und insbesondere bei z.B. einer kanalangepassten Zuordnung nicht wünschenswert. Besonders bevorzugt werden jedoch Systeme, bei denen die Daten eines Teilnehmers bzw. Users auf äquidistant über das Frequenzband verteilte Subträger abgebildet bzw. übertragen werden. Dies ist zur Erreichung der konstanten Einhüllenden im Uplink vorteilhaft. Es kann jedoch unter Umständen auch vorteilhaft sein, gerade benachbarte Subträger derselben Teilnehmerstation zuzuordnen.

Der Vorteil, dass trotz der Anwendung der Transformation Mehrfachzugriffs-Interferenzen (MAI) vollständig vermieden werden können, ergibt sich dadurch, dass die Mehrfachzugriffs-Interferenzen auf Grund der Zuordnung von orthogonalen Subträgern an unterschiedliche Teilnehmerstationen vermieden werden. Die Spreizung ist eine Teilnehmerstationsspezifische Verarbeitung, wobei die Empfangsdaten im Gegensatz zu den Codesymbolen bei OFDM-CDMA im Uplink dem gleichen Kanaleinfluss unterliegen.

Dabei ist die Auswahl der orthogonalen Matrix prinzipiell beliebig. Bevorzugt werden die für sich bekannten Walsh-Hadamard-Transformation oder besonders eine Fourier-Transformation, insbesondere eine diskrete oder schnelle Fourier-Transformation.

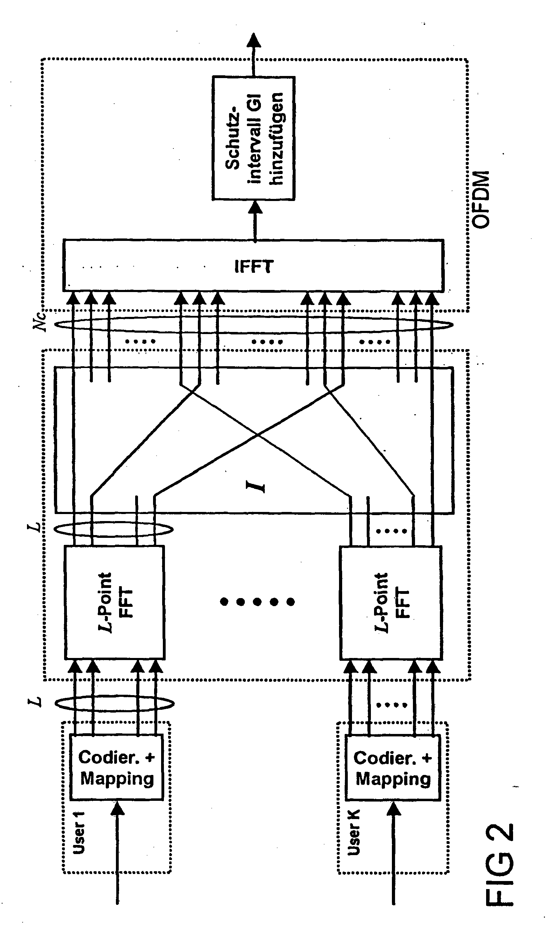

Die Anwendung einer schnellen Fourier-Transformation FFT als bevorzugte Form der Transformation bzw. Spreizung sowie die anschließende Übertragung auf einzelne Subträger ist aus FIG 2 in beispielhafter Ausführungsform ersichtlich. Die Fourier-Transformationen FFT werden dabei teilnehmerspezifisch durchgeführt, d.h. die eintreffenden Datensymbole eines Teilnehmers bzw. Users werden jeweils einer eigenen Fourier-Transformation zugeführt.

Die sich aus den einzelnen teilnehmerspezifischen Fourier-Transformationen ergebenden Daten werden dann auf die einzelnen Frequenz-Subträger f1 ... fN verteilt, wobei die Daten eines Teilnehmers vorzugsweise auf nicht direkt zueinander benachbarte Subträger übertragen werden. Rein prinzipiell kann diese Verteilung auf die einzelnen Subträger jedoch in beliebiger Art und Weise erfolgen.

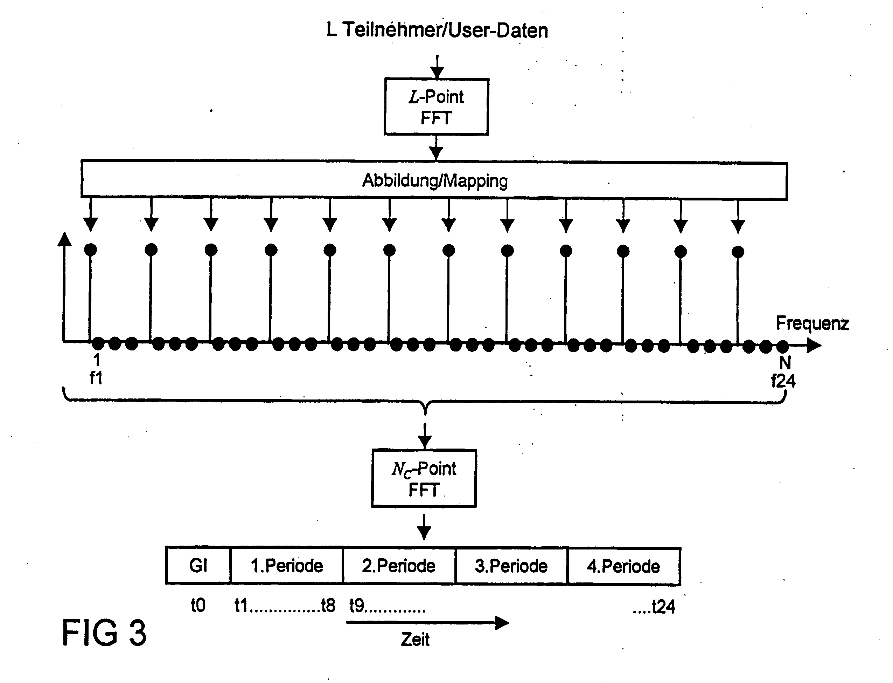

Wie aus FIG 3 ersichtlich, erfolgt eine besonders bevorzugte Verteilung der einzelnen Daten der teilnehmerspezifischen Fourier-Transformationen auf eine äquidistante Abfolge von Subträgern über der Frequenzachse. Beim dargestellten Ausführungsbeispiel werden L Teilnehmerdaten bzw. Datensymbole mit L Datenwerten eines Teilnehmers in die L-wertige Fourier-Transformation (L-Point-FFT) eingeführt. Gemäß dem bevorzugten Ausführungsbeispiel, jedoch nicht zwingend erforderlich, werden durch die Fourier-Transformation wiederum L Datenwerte erzeugt, die auf die N Subträger abgebildet werden.

Die Abbildung der transformierten Werte erfolgt vorliegend auf N = 24 Frequenzkanäle als Subträger f1...f24, wobei die Anzahl der L Datenwerte L = 8 entsprechen soll. Wie dargestellt, kann bei einer äquidistanten Verteilung auf die Subträger f1 der erste Datenwert auf den ersten Subträger f1, der zweite Datenwert auf den fünften Subträger f5, usw. verteilt bzw. übertragen werden.

Es folgt eine Nc-wertige inverse Fourier-Transformation (Nc-Point FFT), die in den vorstehenden FIG als IFFT dargestellt ist. Nach der Umsetzung in eine serielle Datenfolge ergibt sich eine zeitliche Abfolge von einzelnen, über eine Schnittstelle zu übertragenden Datenwerten. Nach dem Vorsetzen eines Schutzintervalls GI ergibt sich hier ein OFDM-Symbol aus einem Schutzintervall GI und 24 zeitlich aufeinander folgenden Datenwerten t1...t24. Wie dargestellt, sind bei der vorliegenden äquidistanten Verteilung die einzelnen Datenwerte auf 4 Abschnitte bzw. Perioden verteilt, wobei alle Perioden des Zeitsignals jedes Teilnehmers bzw. Users identisch sind. Es ergibt sich eine periodische Wiederholung der Datensequenz.

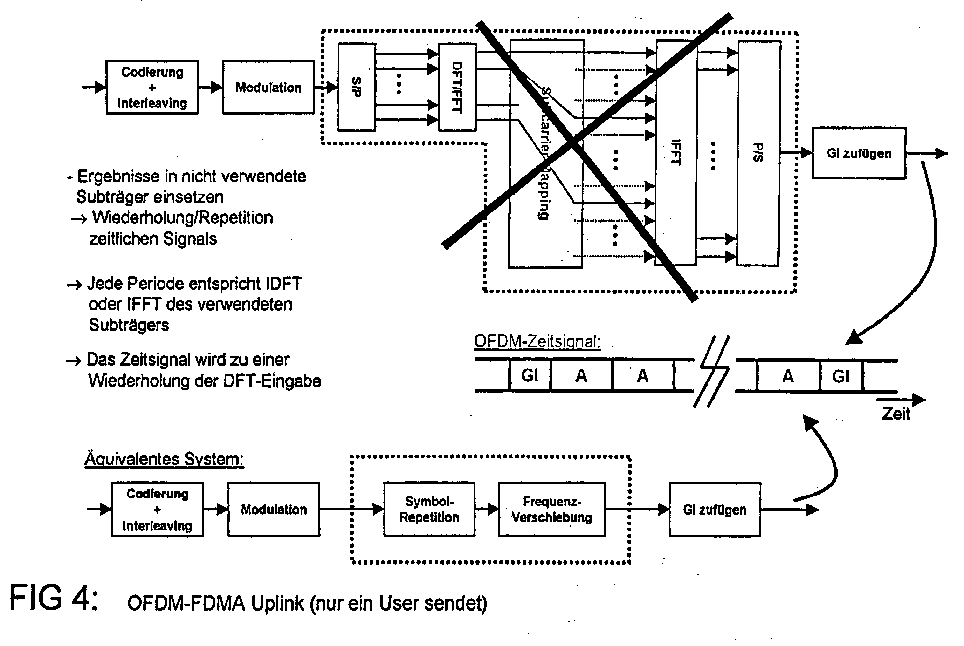

Handelt es sich bei dem Sender um eine Mobilstation, wie dies in FIG 4 dargestellt ist, bleiben alle weiteren Subträger unbelegt, da diese im Uplink von anderen mobilen Teilnehmer in anderen Mobilstation genutzt werden. Im Downlink besteht das Sendesignal aus der Überlagerung der periodischen Sendesignale aller Teilnehmer. Ist allen Teilnehmern die gleiche Anzahl L an Subträgern zugeordnet, so besitzt das Summensignal die gleiche Periodizität wie das Signal jedes einzelnen Teilnehmers. Sind unterschiedlichen Teilnehmern verschiedene Anzahlen an Subträgern zugeordnet, so besitzt dass Summensignal nicht zwangsläufig einen periodischen Signalverlauf. Im Uplink besitzt das Sendesignal eine konstante Einhüllende, wohingegen im Downlink auf Grund der Überlagerung der Signale verschiedener Teilnehmer bzw. Teilnehmerstationen die Einhüllende in der Regel nicht mehr konstant ist, jedoch einen deutlich geringeren Spitzenwert als ein herkömmliches OFDM-Signal aufweist. Entsprechend stellt FIG 2 den Abwärtsverbindung-/Downlink-Fall mit mehreren Teilnehmern pro Sender und FIG 3 den Uplink-Fall dar.

Dies mit einfachen Angaben verallgemeinert, bedingt bei einer Datensymbollänge L der eintreffenden Teilnehmerdaten und einer Abbildung auf ebenfalls L-wertige Transformationsergebnisse eine Abbildung auf die Subträger f1...fN, wobei N Subträger zur Verfügung stehen. Nach der inversen Fourier-Transformation hat dann das OFDM-Symbol die Länge N zuzüglich der Länge des Schutzintervalls GI. Die einzelnen Datenwerte sind dabei bei äquidistanter Verteilung auf N/L Datenperioden verteilt, wobei die Datenperioden auch als Datenblöcke oder Datenabschnitte bezeichnet werden können.

Der besondere Vorteil der Kombination einer durch eine Fourier-Transformation FFT gebildeten Spreizmatrix in Kombination mit der äquidistanten Verteilung auf der Frequenzachse besteht darin, dass nach der inversen Fourier-Transformation im Uplink ein Zeitsignal mit einer konstanten Einhüllenden und im Downlink ein Zeitsignal mit deutlich gegenüber einem herkömmlichen OFDM-System reduzierten Spitzenwert entsteht. Diese konstante Einhüllende ergibt sich, da das Spitzenwert-zu-Durchschnittswert-Verhältnis (PAR) deutlich geringer als bei anderen Erzeugungsverfahren für OFDM-Symbole ist. Es entspricht gerade dem PAR der Modulationsymbole vor der Transformation. Würde hier eine PSK-Modulation eingesetzt, so ist das PAR=1.

Zum Verständnis wird formell angemerkt, dass es sich hierbei um allgemeine lineare Transformationen handelt, also auch bei Anwendung einer Fourier-Transformation zum Transformieren bzw. Spreizen der teilnehmerspezifischen Daten kein direkter Bezug eines Frequenzraums zu einem Zeitraum besteht, wie dies bei einer üblichen Betrachtung von Fourier-Transformationen wäre.

Gemäß einer weiter entwickelten Ausführungsform kann für den Fall der Betrachtung einer Fourier-Transformation als Spreizmatrix und einer anschließenden inversen Fourier-Transformation zur Übertragung der einzelnen Frequenz-Subträger auf eine zeitliche Datenfolge festgestellt werden, dass sich die beiden Fourier-Transformationen rein theoretisch hinsichtlich ihrer Wirkung aufheben. Als Konsequenz daraus kann eine besonders bevorzugte Ausführungsform zur Erzeugung von OFDM-Symbolen umgesetzt werden, wie sie in FIG 4 für beispielsweise eine Sendung in Aufwärtsrichtung (Uplink) von einer Teilnehmerstation zu einer netzseitigen Station dargestellt ist, wenn nur ein einzelner Teilnehmer sendet, wobei sich dann sich die Transformationen aufheben.

Durch die in der Wirkung aufhebende Transformationsabfolge einer Fourier-Transformation FFT und nach der Verteilung auf die einzelnen Subträger f1...fN einer inversen Fourier-Transformation IFFT kann bei der Umsetzung dieser Block entfallen bzw. durch eine Wiederholung der Symbolsequenz entsprechend der Anzahl der zugeordneten, jetzt fiktiven, Subträger und anschließender Frequenzverschiebung bei der Verteilung der Eingangsdaten auf die Ausgangsdaten ersetzt werden.

Eine Wiederholung des zeitlichen Signals entsteht daraus, dass die Subträger, die dem User nicht zugeordnet sind, unmoduliert bleiben. Jede einzelne Periode des OFDM-Signals entspricht dann letztendlich der inversen diskreten Fourier-Transformation der verwendeten Subträger. Somit enthält theoretisch bei idealer Umsetzung und später fehlerfreien Übertragung über die Schnittstelle empfängerseitig das empfangene OFDM-Signal hinter dem Schutzintervall GI eine Anzahl von Perioden mit jeweils gleicher Datenfolge. Das zeitliche Signal entspräche somit einer wiederholenden Abfolge der ursprünglichen Eingabe in die diskrete Fourier-Transformation, die gemäß der Ausführungsform von FIG 2 einleitend vorzunehmen wäre.

Wie aus FIG 4 im unteren Bereich ersichtlich, ergibt sich dadurch ein äquivalentes System, bei dem die Blöcke mit den Umsetzungen serieller in paralleler Daten, der teilnehmerspezifischen Fourier-Transformation, der Abbildung bzw. Übertragung auf die Subträger, der inversen Fourier-Transformation und der Umsetzung paralleler in serieller Daten ersetzt werden können durch eine Abfolge von sich wiederholenden Symbolen und eine entsprechend vorzunehmende Frequenzverschiebung.

## Patentansprüche

1. Verfahren zum Erzeugen von Sendesignalen, insbesondere OFDM-Symbolen dafür, in einem Kommunikationssystem, bei dem Daten von einer oder mehreren Datenquellen (User 1 - User M, User 1 - User K) auf eine Vielzahl von orthogonalen Subträgern (Nc) abgebildet werden,
**dadurch gekennzeichnet, dass**
die Daten der Datenquelle zur Bildung eines zeitlich, insbesondere durch eine Inverse Fast Fourier-Transformation (IFFT), abfolgenden OFDM-Symbols datenquellenspezifisch transformiert und den Subträgern zugeordnet werden, wobei
- die Zuordnung unabhängig von der Transformation datenquellenspezifisch erfolgt,
- die Transformation als Spreizung mittels einer orthogonalen Matrix durchgeführt wird und
- das Transformationsergebnis derart auf die Subträger übertragen wird, dass die Daten der Datenquelle exklusiv mehreren Subträgern zugeordnet werden.

2. Verfahren nach Anspruch 1, bei dem
das Transformationsergebnis derart auf die Subträger übertragen wird, dass der Datenquelle eines ersten Teilnehmers (User 1) erste Subträger und der Datenquelle eines letzten Teilnehmers (User M, User K) letzte Subträger zugeordnet werden.

3. Verfahren nach Anspruch 2, bei dem
jedem Subträger der jeweils ersten bis letzten Subträger nur Daten einer Datenquelle zugeordnet werden.

4. Verfahren nach Anspruch 1, 2 oder 3, bei dem
die Daten der Datenquelle vor der Abbildung auf eine Vielzahl von Subträgern (Nc) kanalcodiert und moduliert werden.

5. Verfahren nach Anspruch 1, bei dem
die Zuordnung der Daten jeweils einer Datenquelle zu den Subträgern zu äquidistant über den Träger verteilten Subträgern durchgeführt wird.

6. Verfahren nach einem vorstehenden Anspruch, bei dem
die Zuordnung der transformierten Daten einer einzelnen Datenquelle zu den Subträgern mehrer späterer OFDM-Symbole durchgeführt wird.

7. Verfahren nach Anspruch 1, bei dem
Daten einer Datenquelle nach Kanalcodierung und Modulation zur Bildung des zeitlich abfolgenden OFDM-Symbols nach einem Schutzintervall blockweise eingesetzt werden, wobei jeder der Blöcke aus jeweils der vollständigen Datenabfolge besteht.

8. Verfahren nach Anspruch 7, bei dem
das Einsetzen der Daten in das OFDM-Symbol bei der Verteilung der Eingangsdaten auf die Ausgangsdaten durch eine Wiederholung der Symbolsequenz entsprechend der Anzahl zugeordneter Subträger und eine anschließende Frequenzverschiebung durchgeführt wird.

9. Kommunikationssystemvorrichtung mit
- einem Dateneingang von zumindest einer Datenquelle,
- einer Steuereinrichtung zum Betreiben der Kommunikationssystemvorrichtung und zum Verarbeiten von Daten,
- zumindest einer Speichereinrichtung und/oder Verarbeitungsmodulen zum zeitweiligen Speichern und Verarbeiten von Daten der zumindest einen Datenquelle,
**dadurch gekennzeichnet, dass**
die Steuereinrichtung zum Erzeugen von Sendesignalen, insbesondere OFDM-Symbolen dafür, derart ausgebildet ist, dass die Daten der Datenquelle zur Bildung eines zeitlich, insbesondere durch eine Inverse Fast Fourier-Transformation (IFFT), abfolgenden OFDM-Symbols datenquellenspezifisch transformierbar und den Subträgern zuordbar sind, wobei
- die Zuordnung unabhängig von der Transformation datenquellenspezifisch erfolgt,
- die Transformation als Spreizung mittels einer orthogonalen Matrix durchführbar ist und
- das Transformationsergebnis derart auf die Subträger übertragbar ist, dass die Daten der Datenquelle exklusiv mehreren Subträgern zuordbar sind.

10. Kommunikationssystemvorrichtung nach Anspruch 9,
**dadurch gekennzeichnet, dass**
die Steuereinrichtung derart ausgebildet ist, dass mit der Übertragung des Transformationsergebnisses auf die Subträger der Datenquelle eines ersten Teilnehmers (User 1) erste Subträger und der Datenquelle eines letzten Teilnehmers (User M, User K) letzte Subträger zuordbar sind.

11. Kommunikationssystemvorrichtung nach Anspruch 10,
**dadurch gekennzeichnet, dass**
die Steuereinrichtung derart ausgebildet ist, dass jedem Subträger der jeweils ersten bis letzten Subträger nur Daten einer Datenquelle zuordbar sind.

12. Kommunikationssystemvorrichtung nach Anspruch 9, 10 oder 11,
**dadurch gekennzeichnet, dass**
die Steuereinrichtung derart ausgebildet ist, dass die Daten der Datenquelle vor der Abbildung auf eine Vielzahl von Subträgern (Nc) kanalcodierbar und modulierbar sind.

13. Kommunikationssystemvorrichtung nach Anspruch 9,
**dadurch gekennzeichnet, dass**
die Steuereinrichtung derart ausgebildet ist, dass die Daten jeweils einer Datenquelle über den Träger verteilten Subträgern äquidistant zuordbar sind.

14. Kommunikationssystemvorrichtung nach Anspruch 9,
**dadurch gekennzeichnet, dass**
die Steuereinrichtung derart ausgebildet ist, dass die transformierten Daten einer einzelnen Datenquelle den Subträgern mehrer späterer OFDM-Symbole zuordbar sind.

15. Kommunikationssystemvorrichtung nach Anspruch 9,
**dadurch gekennzeichnet, dass**
die Steuereinrichtung derart ausgebildet ist, dass Daten einer Datenquelle nach Kanalcodierung und Modulation zur Bildung des zeitlich abfolgenden OFDM-Symbols nach einem Schutzintervall blockweise einsetzbar sind, wobei jeder der Blöcke aus jeweils der vollständigen Datenabfolge besteht.

16. Kommunikationssystemvorrichtung nach Anspruch 15,
**dadurch gekennzeichnet, dass**
die Steuereinrichtung derart ausgebildet ist, dass das Einsetzen der Daten in das OFDM-Symbol bei der Verteilung der Eingangsdaten auf die Ausgangsdaten durch eine Wiederholung der Symbolsequenz entsprechend der Anzahl zugeordneter Subträger und eine anschließende Frequenzverschiebung erfolgt.

## Claims

1. Method for generating transmit signals, in particular OFDM symbols therefor, in a communication system, in which data is mapped from one or more data sources (User 1 - User M, User 1 - User K) to a plurality of orthogonal subcarriers (Nc),
**characterised in that**
the data of the data sources is transformed and assigned to the subcarriers in a data source-specific way for formation of a temporal, in particular chronological OFDM symbol on account of an Inverse Fast Fourier Transformation (IFFT), wherein
- the assignment is undertaken data source-specifically independent of the transformation,
- the transformation is undertaken as spreading by means of an orthogonal matrix and
- the transformation result is transmitted to the subcarrier such that the data of the data source is exclusively assigned to a number of subcarriers.

2. Method according to claim 1, in which
the transformation result is transmitted to the subcarrier such that the data source of a first subscriber (User 1) is assigned first subcarriers and the data source of a last subscriber (User M, User K) is assigned last subcarriers.

3. Method according to claim 2, in which
only data of one data source is assigned to each subcarrier of the first to last subcarrier respectively.

4. Method according to claim 1, 2 or 3, in which
the data of the data source is channel-encoded and modulated prior to mapping to a plurality of subcarriers (Nc).

5. Method according to claim 1, in which
the assignment of data of one data source in each case to the subcarriers is undertaken to subcarriers distributed equidistantly over the carriers.

6. Method according to a preceding claim, in which
the assignment of the transformed data of an individual data source to the subcarriers of a number of later OFDM symbols is performed.

7. Method according to claim 1, in which
data of a data source is used block-by-block after channel encoding and modulation to form a chronological OFDM symbol after a guard interval, with each of the blocks consisting of the complete data sequence in each case.

8. Method according to claim 7, in which
the data in the OFDM symbol is used on distribution of the input data to the output data by a repetition of the symbol sequence corresponding to the number of assigned subcarriers and a subsequent frequency shift.

9. Communication device with
- a data input of at least one data source,
- a control device for operating the communication system device and for processing data,
- at least one of memory device and/or processing modules for temporary storage and processing of data of the at least one data source,
**characterised in that**
the control device is designed for generating transmit signals, in particular OFDM symbols therefor, such that the data of the data sources can be transformed and assigned to the subcarriers in a data source-specific way for formation of a temporal, in particular chronological OFDM symbol on account of an Inverse Fast Fourier Transformation (IFFT), wherein
- the assignment is undertaken data source-specifically independent of the transformation,
- the transformation is undertaken as spreading by means of an orthogonal matrix and
- the transformation result is transmitted to the subcarrier such that the data of the data source can be exclusively assigned to several subcarriers.

10. Communication device according to claim 9,
**characterised in that**
the control device is embodied such that with the transmission of the transformation result onto the subcarrier, a first subcarrier can be assigned to the data source of a first subscriber (User 1) and a last subcarrier can be assigned to the data source of a last subscriber (User M, User K).

11. Communication device according to claim 10,
**characterised in that**
the control device is embodied such that only data of one data source can be assigned to each subcarrier of the respectively first to last subcarrier.

12. Communication device according to claim 9, 10 or 11,
**characterised in that**
the control facility is embodied such that the data of the data source can be channel encoded and modulated prior to mapping to a plurality of subcarriers (Nc).

13. Communication device according to claim 9,
**characterised in that**
the control device is embodied such that the data of one data source in each case can be assigned to the subcarriers distributed equidistantly over the carriers

14. Communication device according to claim 9,
**characterised in that**
the control facility is embodied so that the transformed data of an individual data source can be assigned to the subcarriers of several subsequent OFDM symbols.

15. Communication device according to claim 9,
**characterised in that**
the control device is embodied such that data of a data source is used block-by-block after channel encoding and modulation to form a chronological OFDM symbol after a guard interval, with each of the blocks consisting of the complete data sequence in each case.

16. Communication device according to claim 15,
**characterised in that**
the control device is embodied such that the data in the OFDM symbol is used on distribution of the input data to the output data by a repetition of the symbol sequence corresponding to the number of assigned subcarriers and a subsequent frequency shift.

## Revendications

1. Procédé de production de signaux d'émission, et plus particulièrement de symboles OFDM pour ceux-ci, dans un système de communication, dans lequel des données d'une ou de plusieurs sources de données (User 1 - User M, User 1 - User K) sont appliquées sur une pluralité de sous-porteuses orthogonales (Nc), **caractérisé en ce que** les données de la source de données, pour former un symbole OFDM se présentant sous la forme d'une suite temporelle notamment du fait d'une Inverse Fast Fourier-transformation (IFFT), sont transformées de manière spécifique à la source de données et associées aux sous-porteuses,
- l'association étant effectuée de manière spécifique à la source de données indépendamment de la transformation,
- la transformation étant effectuée sous la forme d'un étalement au moyen d'une matrice orthogonale et
- le résultat de la transformation étant transmis aux sous-porteuses de manière telle que les données de la source de données sont associées exclusivement à plusieurs sous-porteuses.

2. Procédé selon la revendication 1, selon lequel le résultat de la transformation est transmis aux sous-porteuses de manière telle que des premières sous-porteuses sont associées à la source de données d'un premier utilisateur (User 1) et des dernières sous-porteuses sont associées à la source de données d'un dernier utilisateur (User M, User K).

3. Procédé selon la revendication 2, selon lequel uniquement des données d'une source de données sont associées à chaque sous-porteuse des premières aux dernières sous-porteuses respectivement.

4. Procédé selon la revendication 1, 2 ou 3, selon lequel les données de la source de données sont codées en canal et modulées avant leur application sur une pluralité de sous-porteuses (Nc).

5. Procédé selon la revendication 1, selon lequel l'association des données de respectivement une source de données aux sous-porteuses est effectuée à des sous-porteuses réparties de manière équidistante sur la porteuse.

6. Procédé selon une revendication précédente, selon lequel l'association des données transformées d'une source de données individuelle est effectuée aux sous-porteuses de plusieurs symboles OFDM ultérieurs.

7. Procédé selon la revendication 1, selon lequel des données d'une source de données, après le codage en canal et la modulation pour former le symbole OFDM se présentant sous la forme d'une suite temporelle, sont mises en place par blocs après un intervalle de protection, chacun des blocs se composant respectivement de la suite de données complètes.

8. Procédé selon la revendication 7, selon lequel la mise en place des données dans le symbole OFDM est effectuée, lors de la répartition de données d'entrée sur des données de sortie, par une répétition de la séquence de symboles conformément au nombre de sous-porteuses associées et par un décalage de fréquence qui y fait suite.

9. Dispositif de système de communication comportant :
- une entrée de données d'au moins une source de données,
- un dispositif de commande pour exploiter le dispositif de système de communication et pour traiter des données,
- au moins un dispositif de mémoire et/ou des modules de traitement pour le stockage temporaire et le traitement de données de l'au moins une source de données,
**caractérisé en ce que** le dispositif de commande pour produire des signaux d'émission, et plus particulièrement des symboles OFDM pour ceux-ci, est conçu de telle manière que les données de la source de données, pour former un symbole OFDM se présentant sous la forme d'une suite temporelle notamment du fait d'une Inverse Fast Fourier-Transformation (IFFT), peuvent être transformées de manière spécifique à la source de données et associées aux sous-porteuses,
- l'association étant effectuée de manière spécifique à la source de données indépendamment de la transformation,
- la transformation pouvant être effectuée sous la forme d'un étalement au moyen d'une matrice orthogonale et
- le résultat de la transformation pouvant être transmis aux sous-porteuses de manière telle que les données de la source de données peuvent être associées exclusivement à plusieurs sous-porteuses.

10. Dispositif de système de communication selon la revendication 9, **caractérisé en ce que** le dispositif de commande est conçu de manière telle que, par la transmission du résultat de la transformation aux sous-porteuses, des premières sous-porteuses peuvent être associées à la source de données d'un premier utilisateur (User 1) et des dernières sous-porteuses peuvent être associées à la source de données d'un dernier utilisateur (User M, User K).

11. Dispositif de système de communication selon la revendication 10, **caractérisé en ce que** le dispositif de commande est conçu de manière telle qu'uniquement des données d'une source de données peuvent être associées à chaque sous-porteuse des premières aux dernières sous-porteuses respectivement.

12. Dispositif de système de communication selon la revendication 9, 10 ou 11, **caractérisé en ce que** le dispositif de commande est conçu de manière telle que les données de la source de données sont codées en canal et modulées avant leur application sur une pluralité de sous-porteuses (Nc).

13. Dispositif de système de communication selon la revendication 9, **caractérisé en ce que** le dispositif de commande est conçu de manière telle que les données de respectivement une source de données peuvent être associées de manière équidistante à des sous-porteuses réparties sur la porteuse.

14. Dispositif de système de communication selon la revendication 9, **caractérisé en ce que** le dispositif de commande est conçu de manière telle que les données transformées d'une source de données individuelle peuvent être associées aux sous-porteuses de plusieurs symboles OFDM ultérieurs.

15. Dispositif de système de communication selon la revendication 9, **caractérisé en ce que** le dispositif de commande est conçu de manière telle que des données d'une source de données, après le codage en canal et la modulation pour former le symbole OFDM se présentant sous la forme d'une suite temporelle, sont mises en place par blocs après un intervalle de protection, chacun des blocs se composant respectivement de la suite de données complètes.

16. Dispositif de système de communication selon la revendication 15, **caractérisé en ce que** le dispositif de commande est conçu de manière telle que la mise en place des données dans le symbole OFDM est effectuée, lors de la répartition de données d'entrée sur des données de sortie, par une répétition de la séquence de symboles conformément au nombre de sous-porteuses associées et par un décalage de fréquence qui y fait suite.
